# EUROPEAN PATENT APPLICATION

(11) **EP 4 451 525 A1**
(43) Date of publication of application: **23.10.2024**
(21) Application number: 24170161.4
(22) Date of filing: 15.04.2024
(51) Int. Cl.: H02K 7/02

(54) **ELECTRIC AXLE HAVING A ROTOR FOR IMPROVED SOUND GENERATION**

(30) Priority: 20.04.2023 IT 202300007737
(71) Applicant: FERRARI S.p.A., 41100 Modena (IT)
(72) Inventor: PALERMO, Antonio, 41100 Modena (IT); QUATTROMANI, Gianluca, 41100 Modena (IT); PULVIRENTI, Francesco, 41100 Modena (IT); FERRARA, Davide, 41100 Modena (IT); FAVERZANI, Paolo, 41100 Modena (IT)
(74) Representative: Studio Torta S.p.A.

(57) **Abstract**

An electric axle (4) for a motor vehicle (1) includes an electric motor (5), a transmission assembly to transmit mechanical power delivered by the electric motor (5) to traction means (3) of the motor vehicle for moving the motor vehicle, wherein one between the electric motor (5) and the transmission assembly comprises a rotor (7) rotatable around a rotor axis (R) in response and corresponding to the mechanical power delivered by the motor (5), and wherein the electric axle (4) comprises at least one additional mass (10) coupled to the rotor (7) in a movable manner relatively to the rotor (7), characterized by comprising guiding means (11) configured to constrain a displacement of the mass (10) along a direction (W) fixed to the rotor (7) and having at least one radial component with respect to the rotor axis (R), the mass (10) being arranged eccentrically with respect to the rotor axis (R) by the guiding means (11).

## Description

### CROSS-REFERENCE TO RELATED APPLICATIONS

This patent application claims priority from Italian patent application no. 102023000007737 filed on April 20, 2023, the entire disclosure of which is incorporated herein by reference.

### TECHNICAL FIELD

The invention relates to an electric axle for a motor vehicle, as well as to the motor vehicle comprising the electric axle.

### PRIOR ART

Some motor vehicles only utilize electric motors as propulsion means and therefore are commonly called fully electric or more simply electric motor vehicles.

During their operation, the electric motors emit sounds normally considered as faint or even unpleasant.

In fact, in the automotive sector, the electric motors utilized are normally the ones suitable for rotating at relatively high speeds, so as to contain the bulk and the weight; consequently, the produced sounds have intensities which become relatively significant in the field of high frequencies.

Therefore, the overall sounds produced are perceived by the human ear as unpleasant whistles.

This has a negative impact on the driver since the latter consequently results to be less involved in the driving, less aware of the operating regime of the motor, or even bothered by the unpleasantness of the sounds.

Therefore, the need is felt to improve the quality of the sounds perceived by the driver of an electric motor vehicle, in particular with the aim to increase the involvement and the awareness of the driver with respect to the operating conditions of the motor vehicle.

An object of the invention is to satisfy the need indicated above, preferably in a simple and reliable manner.

### DESCRIPTION OF THE INVENTION

The object is achieved by an electric axle according to claim 1.

The dependent claims set forth particular embodiments of the invention.

### BRIEF DESCRIPTION OF THE DRAWINGS

In the following, embodiments of the invention are described for a better understanding thereof by way of non-limiting examples and with reference to the accompanying drawings wherein:
- Figure 1 is a perspective view of a motor vehicle comprising an electric axle according to the invention,

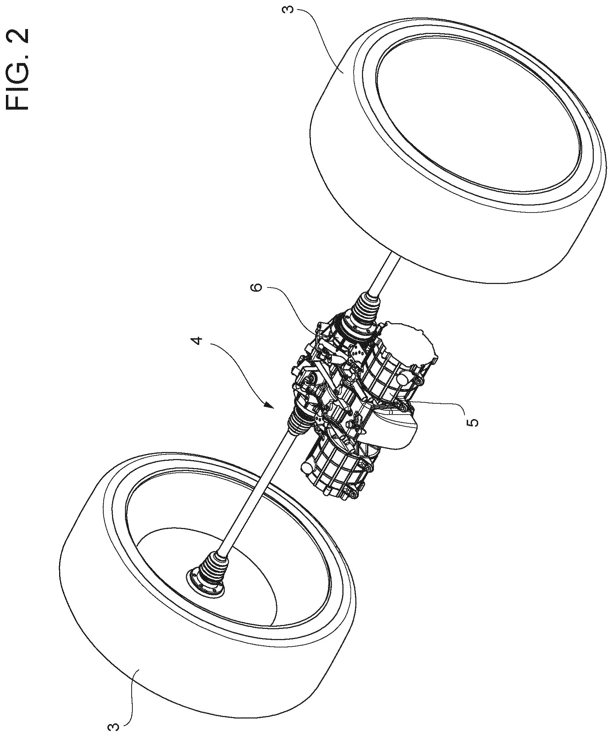

- Figure 2 is a perspective view of the electric axle on an enlarged scale, and
- Figures 3, 4 schematically illustrate cross-sections of possible rotors of the axle, according to respective embodiments of the invention.

### EMBODIMENTS OF THE INVENTION

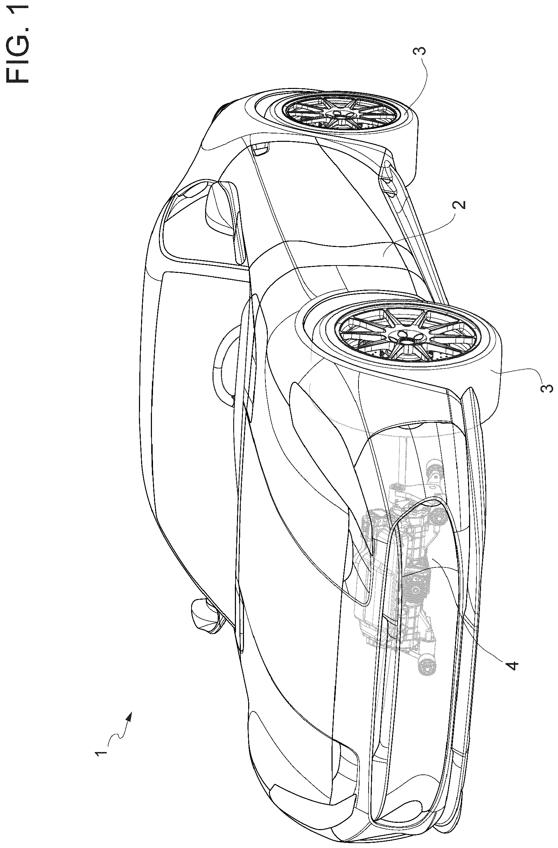

In Figure 1, reference numeral 1 is used to indicate, as a whole, a motor vehicle.

As is usual, the motor vehicle 1 has a body 2, a plurality of wheels 3, and a suspension assembly not illustrated and configured to suspend the body 2 with respect to the wheels 3.

The wheels 3 represent a known traction means for moving the motor vehicle 1, but for the purposes of the invention they could be replaced by any other suitable, also unusual, means, such as for example tracked means.

The motor vehicle 1 further comprises at least one electric axle 4 with an electric motor 5 and a transmission assembly 6.

The electric motor 5 is configured to deliver mechanical power; the transmission assembly 6 is configured to transmit the delivered mechanical power to two of the wheels 3 for moving the motor vehicle 1.

Possibly, the transmission assembly 6 could have also been configured to transmit the mechanical power to all of the wheels 3 or more in general to the traction means of the motor vehicle 1.

Preferably, the transmission assembly 6 also has the function of reducing the speed exiting the motor 5, thus driving the wheels 3 into rotation with a reduced rotation speed with respect to that exiting the motor 5.

Clearly, the reduction in the speed corresponds to a multiplication of the torque, since the power of the motor 5 is transmitted in full to the wheels 3, neglecting the efficiency or mechanical performance of the transmission assembly 6.

For such purpose, the transmission assembly 6 can comprise a gearbox, in turn comprising a plurality of gears.

One between the motor 5 and the transmission assembly 6 comprises a rotor 7 rotatable around a rotor axis R in response and corresponding to the power delivered by the motor 5.

The rotor 7 could be part, for example, of the transmission assembly 6. In particular, the rotor 7 could be a gear wheel of the above-mentioned gears. In fact, the gear wheel rotates around its axis due to the power delivered by the motor 5 and according to a specific function of the power delivered by the motor 5, for example according to a transmission ratio of the gears.

Preferably, the rotor 7 is part of the motor 5. In particular, the power delivered by the motor 5 is directly the one with which the rotor 7 rotates around the axis R.

The rotor 7 magnetically interacts with a stator 8 of the motor 5 and thus rotates due to the magnetic interaction with the stator 8.

More specifically, the rotor 7 is coupled to a shaft 9 of the transmission assembly 6. More precisely, the rotor 7 is rotationally fixed to the shaft 9. In particular, the rotor 7 is keyed to the shaft 9.

The shaft 9 is supported by the body 2 in a rotatable manner around the axis R by means of support devices of the motor vehicle 1, for example roller bearings of known type and not illustrated.

The support devices have a portion fixed to the body 2. The shaft 9 is carried by the fixed portion in a rotatable manner around the axis R. For example, the support devices comprise rolling elements radially interposed between the fixed portion and the shaft 9. The rolling elements are radially arranged in contact both with the shaft 9 and with the fixed portion of the support devices, so that the rolling elements roll on the fixed portion during the rotation of the shaft 9 around the axis R.

The axle 4 comprises a mass or a body 10 coupled to the rotor 7 in a movable manner with respect to the rotor 7.

More precisely, the coupling of the mass 10 to the rotor 7 entails that a movement of the rotor 7 is transmitted at least in part to the mass 10. In other words, a force or a torque applied to the rotor 7 corresponds to a force or a torque applied to the mass 10, although the corresponding forces or torques do not necessarily have to be identical to each other. Therefore, the term "corresponding" here means that the forces or the torques are function of each other.

According to the invention, the axle 4 comprises a guide 11 configured to guide or constrain a displacement of the mass 10 with respect to the rotor 7.

By means of the guide 11, the mass 10 can shift with respect to the rotor 7 only along a direction W fixed to the rotor 7. In other words, the guide 11 constrains the displacement of the mass 10 along the direction W.

In other words, the mass 10 has a degree of freedom with respect to the rotor 7; the degree of freedom corresponds to a virtual displacement of the mass 10 relative to the rotor 7 and along the direction W.

Furthermore, by means of the guide 11, the mass 10 is arranged eccentrically with respect to the axis R, i.e. is radially spaced from the axis R. In other words, the guide 11 determines a plurality of allowable positions for the mass 10 relative to the rotor 7. Each one of such allowable positions is eccentric with respect to the axis R, i.e. spaced from the axis R. In other words, the mass 10 or more precisely its centre of mass can never be arranged at the axis R.

In this manner, a rotation of the rotor 7 involves exerting a centrifugal force on the mass 10; the modulus of the centrifugal force is a function of the angular speed of rotation of the rotor 7 and of the radial position of the mass 10.

The centrifugal force further corresponds to a centripetal reaction radially directed towards the axis R.

Therefore, the centripetal reaction can contribute to forming a resultant force exerted by the rotor 7 on the shaft 9; the resultant force corresponds, in turn, to a bending stress on the shaft 9.

Since the centripetal reaction rotates around the axis R like the rotor 7, the shaft 9 is consequently subject to a rotary bending corresponding to a consequent vibration, which propagates on the body 2 by means of the support devices.

The vibration can comprise various contributions in frequency, at least one of which has a frequency equal to the frequency of the rotation of the rotor 7.

By propagating in the surrounding air, the vibration is associated with a sound; since the frequency of the rotation of the rotor 7 is relatively low, in particular typically between 0 Hz and 500 Hz, the associated sound results to be pleasant.

Furthermore, advantageously, the sound is especially representative of the operating regime of the motor 5.

In fact, the frequency of the sound increases together with the angular speed of the rotor 7, in turn increasing with the power delivered by the motor 5.

According to the exemplifying and non-limiting embodiments illustrated, the guide 11 is obtained as a groove on the rotor 7 extending along the direction W.

The mass 10 is coupled to the guide 11 as a slide sliding on the guide 11 along the direction W.

Preferably, the axle 4 comprises a reaction device or apparatus 12 configured to exert a reaction force on the mass 10 in response to an increment of a distance of the mass 10 from the axis R, where the reaction force is increasing with the increment and is directed towards the axis R.

According to the exemplifying and non-limiting embodiments illustrated, the reaction device 12 is represented as a spring extending along the direction W between two ends fixed to the mass 10 and to the rotor 7, respectively.

However, the reaction device 12 could be manufactured in a different manner, for example by means of the introduction of gases which can be compressed inside a closed casing of the guide 11, where the mass 10 slides on the inside of the closed casing, alternatively or additionally to the illustrated spring.

The reaction devices 12 could be or comprise, although not necessarily, an elastic device which suspends the mass 10 with respect to a point A of the rotor. In this case, the reaction force would be an elastic reaction force directed according to the direction W towards the axis R and proportional to the displacement of the mass 10 along the direction W.

The elastic reaction force is exerted by the elastic device in response to the increment.

Here, the term "point" can be understood in a broader manner as a zone or area.

Furthermore, the expression "towards the axis R" is to be understood such that the distance between the mass 10 and the axis R is reduced, i.e. in a manner contrary to the increment, namely with reference to a direction having a radial component directed towards the axis R.

According to embodiments not illustrated, the reaction device comprises, alternatively or additionally to the elastic device, a damping device configured to exert on the mass 10 a damping force contrary to the displacement of the mass 10 along the direction W and more in particular increasing with a speed of the displacement.

Practically, the reaction device 12 could comprise a damper which couples the mass 10 to the rotor 7 and acts on the mass 10 along the direction W, namely dampens the displacement of the mass 10 along the direction W, in particular in a manner contrary to the increment of the distance between the mass 10 and the axis R.

The reaction device 12 serves for limiting an increment of a force on the shaft 9 specifically caused by the rise in the angular speed of the rotor 7.

In fact, the centrifugal force on the mass 10 increases by the square of the angular speed; the reaction force counterbalances the non-linear rise of the centrifugal force caused by the rise in the angular speed, so that the increment of the force on the shaft 9 specifically caused by the rise in the angular speed approaches a condition of linearity.

As it will become clearer in the following, this will have implications on the intensity of the sound produced by means of the rotation of the rotor 7.

In fact, the forces applied on the mass 10 correspond to reactions on the shaft 9, in turn affecting the resultant force exerted by the rotor 7 on the shaft 9. The amplitude of the vibration and thus the intensity of the sound depend on such resultant force.

Preferably, the rotor 7 has a mass distribution such that a centre of gravity of an assembly comprising the mass 10 and the rotor 7 or composed of them approaches the axis R in an increasing manner with the increment of the distance between the mass 10 and the axis R.

In other words, the rotor 7 is already per se unbalanced with respect to the axis R, more precisely such that the increment of the distance between the mass 10 and the axis R tends to rebalance the rotor 7.

In the exemplifying and non-limiting embodiments illustrated, the mass distribution of the rotor 7 is obtained by considering an additional concentrated mass 14 of the rotor 7, for example equal to the mass 10, positioned with a non-null radial distance from the axis R.

Here, a centre of gravity G of the rotor 7 is between the axis R and the mass 14 along the relative radial distance.

Clearly, the mass 14 is a schematic representative example of immediate understanding, but the same mass distribution of the rotor 7 with identical position of the centre of gravity G of the rotor 7 could have been obtained in an infinite number of manners, for example by using more distinct materials for making the rotor 7 or by suitably varying the thickness of the rotor 7 according to the axis R or by suitably removing material from the rotor 7, etcetera.

The guide 11 determines a stroke of the mass 10 along the direction W.

The stroke is defined between two ends or ends of stroke 11a, 11b opposite each other according to the direction W.

The ends 11a, 11b have respective radial distances from the axis R respectively defined by corresponding radii 11c, 11d, where the radius 11d is greater than the radius 11c.

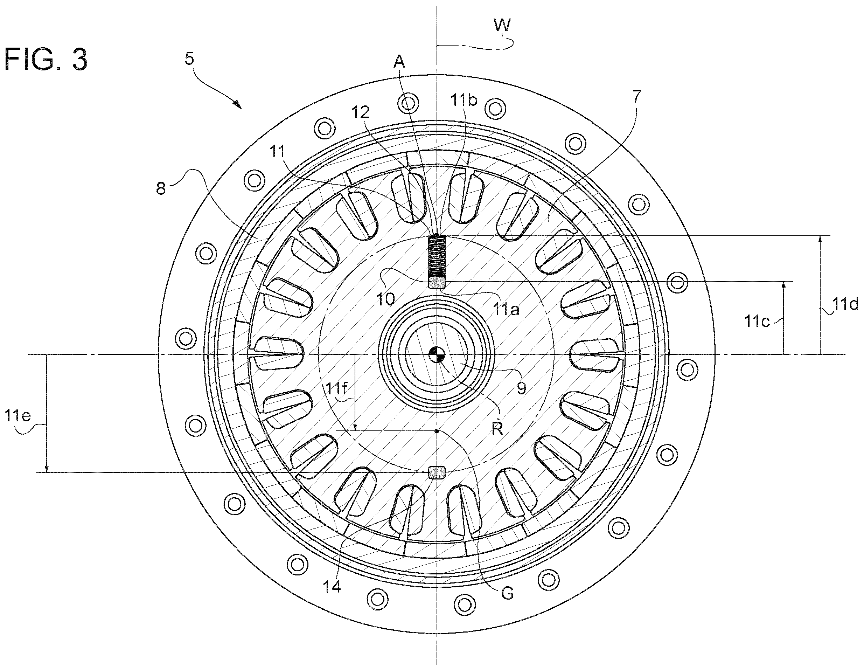

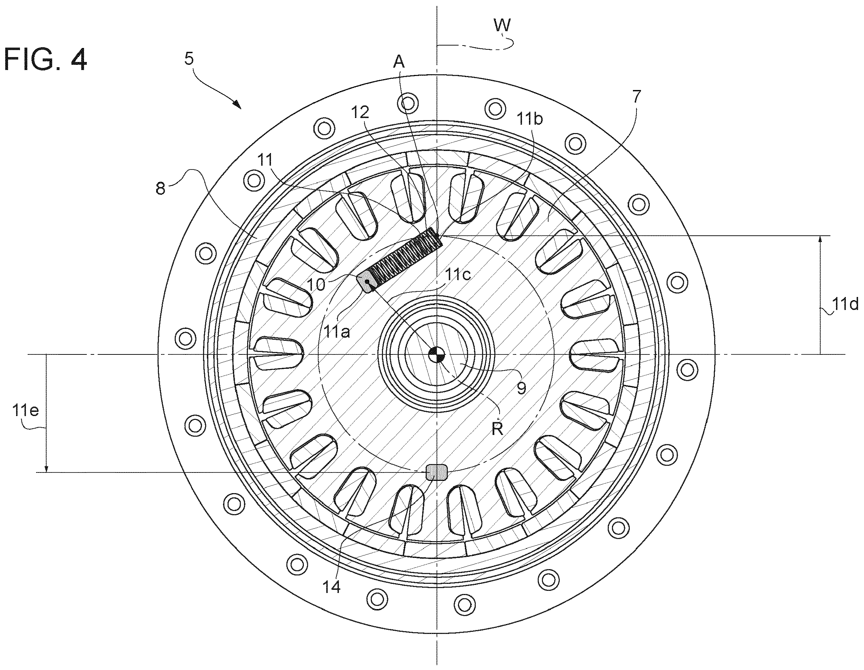

The radial distance of the mass 14 from the axis R is greater than or identical to the radius 11d (preferably identical, as in Figures 3, 4); therefore, with the mass 10 identical to or smaller (less heavy) than the mass 14, the centre of gravity of the assembly composed of the mass 10 and of the rotor 7 will always be between the axis R and the mass 14 or if anything at the axis R, should the radius 11d be aligned with the mass 14 and equal to the radial distance of the mass 14 from the axis R, as in particular in Figures 3, 4.

Naturally, these reasonings are extendable in the case where the mass distribution of the rotor 7 is obtained in a different manner than what illustrated in the figures.

In the illustrated embodiment, the centrifugal force exerted on the mass 14, or more in general associated with the unbalanced rotor 7 due to its mass distribution, is greater than or identical to the centrifugal force exerted on the mass 10, so that a rise in the centrifugal force on the mass 10 reduces the centripetal force resulting on the axis R, since the centrifugal force on the mass 10 is subtracted from the centrifugal force on the mass 14 or more in general associated with the rotor 7, hence the resulting centrifugal force decreases with the relative centripetal force resulting on the shaft 9.

Therefore, preferably but not necessarily, the modulus of the resultant force acting on the shaft 9 decreases upon the rising in the angular speed of the rotor 7. Therefore, the amplitude of the vibration and thus the sound intensity associated with the resultant force acting on the shaft 9 drop down upon the rising in the angular speed of the rotor 7.

This aspect rises the pleasantness of the overall sound emitted by the axle 4.

As mentioned above, the reaction force caused by the reaction device 12 contributes to slowing down the decrease in the resultant force on the shaft 9, thus slowing down also the lowering of the sound intensity.

The term slow down can here be understood with reference to the lowering of a derivative of the resultant force on the shaft 9 with respect to the radial distance of the mass 10 from the axis R.

Preferably, the centre of gravity G of the rotor 7 is radially spaced from the axis R according to a radius 11f, which forms with the radii 11c, 11d respective angles, of which at least the angle formed with the radius 11d is greater than a right angle and more preferably equal to a straight angle, as in Figures 3, 4.

Conveniently, both angles just mentioned are greater than the right angle.

In particular, for example according to the embodiment of Figure 4, the angle formed with the radius 11c is smaller than the angle formed with the radius 11d.

The mass 14 is radially spaced from the axis R according to a radius 11e, which forms with the radii 11c, 11d respective angles, of which at least the angle formed with the radius 11d is greater than a right angle and more preferably equal to a straight angle, as in Figures 3, 4.

Conveniently, both angles just mentioned are greater than the right angle. Still, in Figure 4, the angle formed with the radius 11c is smaller than the angle formed with the radius 11d.

In particular, although not necessarily, the radii 11d, 11e are identical to each other.

In the illustrated embodiments, the end 11b and the centre of gravity G of the rotor 7 are arranged in positions diametrically opposite each other with respect to the axis R. This does not anyway entail that the radii 11d, 11f are necessarily identical; in fact, the radii 11d, 11f have lengths different from each other in Figure 3, even if they could be identical according to other embodiments not illustrated.

Furthermore, in the illustrated embodiments, the direction W lies on a plane orthogonal to the axis R. For example, the groove of the guide 11 can be visible as an empty surface on a cross-section of the rotor 7.

Preferably, the direction W is straight, but it could also be curvilinear according to embodiments not illustrated. For example, the direction W could be an arc of a circle around the axis R.

According to the embodiment of Figure 3, the direction W is radial with respect to the axis R. Therefore, the direction W is here incident and in particular orthogonal to the axis R.

Here, the centrifugal force on the mass 10 is directed along the direction W.

According to the embodiment of Figure 4, the direction W is skew with respect to the axis R.

Therefore, the direction W extends here along a chord of the substantially circular shape of the cross-section of the rotor 7, instead of extending along a radius as in the embodiment of Figure 3.

In this manner, the stroke of the guide 11 can be longer along the direction W and/or wider transversally to the direction W, with respect to the embodiment of Figure 3.

Therefore, the mass 10, which is conveniently rather heavy for intensifying the produced sounds, here exerts lower pressures on the guide 11, hence the designing of the axle 4 becomes simpler.

In the operation of the axle 4, the rotor 7 starts rotating around the axis R with its angular speed. Owing to the rotation of the rotor 7, the mass 10 moves away from the axis R along the direction W sliding or moving on the guide 11.

The movement of the mass 10 is due to the centrifugal force on the same mass 10; the centrifugal force is proportional to the square of the angular speed and to the radial distance from the axis R.

Therefore, although the angular speed of the rotor 7 can be constant, the centrifugal force on the mass 10 increases as its radial distance from the axis R rises.

The movement of the mass 10 is countered on the other hand by the reaction force of the reaction device 12; the reaction force increases, in particular linearly (the reaction force could also increase in a non-linear manner, for example by means of a gas spring), with the moving away of the mass 10 from the axis R, thus compensating the increment of the centrifugal force with the radial distance of the mass 10 from the axis R.

The stiffness associated with the reaction device 12, i.e. the coefficient according to which the reaction force increases with the moving away of the mass 10 from the axis R, is calibrated such that the mass 10 reaches a position of balance along the direction W, according to a one-to-one relation or more generally according to a function of the angular speed of the rotor 7.

The reaching of the position of balance corresponds to a condition of stationary operation.

In the condition of stationary operation, the centrifugal force contributes to forming a centripetal force resulting on the shaft 9. The resulting centripetal force rotates with the same angular speed of the rotor 7.

Therefore, the resulting centripetal force causes a rotary bending of the shaft 9 corresponding to a vibration having a frequency as a function of the angular speed of the rotor and an intensity as a function of the modulus of the resulting centripetal force.

Owing to the mass 14, namely to an equivalent mass distribution of the rotor 7, the modulus of the resulting centripetal force drops down upon the rising in the moving away of the mass 10 from the axis R.

In other words, the centre of gravity of the assembly comprising the rotor 7 and the mass 10 or composed of them approaches the axis R upon the rising of the moving away of the mass 10 from the axis R.

Practically, the rotor 7 becomes more and more balanced, as the mass 10 moves away from the axis R.

The vibration corresponds to a sound which can be heard with increasing frequency and falling intensity with the angular speed of the rotor 7.

Based on the foregoing, the advantages of the axle 4 according to the invention are evident.

The axle 4 generates pleasant sounds for low operating regimes of the motor 5, corresponding to a low angular speed of the rotor 7. In fact, the sounds have low frequency and high intensity, in a manner comparable to the sounds produced by a vehicle provided with an internal combustion engine.

The intensity of the sounds produced by means of the mass 10 fades as the operating regimes of the motor 5 grow, so that the sounds normally associated with the operation of the motor 5 prevail. The latter sounds are generally recognized as acceptable, therefore an excessive presence of noise due to a superposition of the same with the sounds caused by the mass 10 is prevented.

Finally, it is clear that modifications and variations can be made to the axle 4 according to the invention which anyway do not depart from the scope of protection defined by the claims.

In particular, the number and the shape of the described and illustrated components could be different.

## Claims

1. Electric axle (4) for a motor vehicle (1), the electric axle comprising
- an electric motor (5) configured to deliver mechanical power,
- a transmission assembly (6) configured to transmit the mechanical power delivered by the electric motor (5) to traction means (3) of the motor vehicle for moving the motor vehicle,
wherein one between the electric motor (5) and the transmission assembly (6) comprises a rotor (7) rotatable around a rotor axis (R) in response and corresponding to the mechanical power delivered by the motor (5),
and wherein the electric axle (4) comprises at least one additional mass (10) coupled to the rotor (7) in a movable manner relatively to the rotor (7),
**characterized by** comprising guiding means (11) configured to constrain a displacement of the mass (10) along a direction (W) fixed to the rotor (7) and having at least one radial component with respect to the rotor axis (R), the mass (10) being arranged eccentrically with respect to the rotor axis (R) by the guiding means (11).

2. The electric axle according to claim 1, further comprising reaction means (12) configured to exert on the mass (10) a reaction force in response to an increment of a distance of the mass (10) from the rotor axis (R), the reaction force being increasing with said increment and directed towards the rotor axis (R).

3. The electric axle according to claim 2, wherein the reaction means (12) comprise an elastic device, which suspends the mass (10) with respect to a point of the rotor (7) spaced from the rotor axis (R), such that the elastic device exerts said reaction force in response to said increment.

4. The electric axle according to claim 2 or 3, wherein the rotor (7) has a mass distribution such that a centre of gravity of an assembly comprising the mass (10) and the rotor (7) approaches the rotor axis (R) in an increasing manner with said increment.

5. The electric axle according to any of the foregoing claims, wherein the guiding means (11) determine a stroke of the mass along said direction, the stroke being defined between a first and a second end of stroke (11a, 11b) opposite each other according to said direction (W), the first and second ends of stroke (11a, 11b) having respective radial distances from the rotor axis, the radial distances being respectively defined by a first and a second radius (11c, 11d), wherein the first radius (11c) has a shorter length than the second radius (11d), and wherein the rotor (7) has a centre of gravity radially spaced from the rotor axis (R) according to a third radius (11f), the first and second radii (11c, 11d) forming with the third radius (11f) a first and a second angle respectively, wherein at least the second angle is greater than a right angle.

6. The electric axle according to claim 5, wherein the second end of stroke (11d) and said centre of gravity are arranged in diametrically opposite positions with respect to the rotor axis (R).

7. The electric axle according to any of the foregoing claims, wherein said direction (W) lies on a plane orthogonal to the rotor axis (R).

8. The electric axle according to any of the foregoing claims, wherein said direction (W) is straight.

9. The electric axle according to claim 8, wherein said direction (W) is skew with respect to the rotor axis (R).

10. The electric axle according to claim 8, wherein said direction (W) is radial with respect to the rotor axis (R).

11. Motor vehicle (1) comprising an electric axle (4) according to any of the foregoing claims.
